Europäisches Patentamt

European Patent Office

Office européen des brevets

(19)

(11) **EP 1 168 832 A1**

## (12) EUROPEAN PATENT APPLICATION
published in accordance with Art. 158(3) EPC

(43) Date of publication:
**02.01.2002 Bulletin 2002/01**

(51) Int Cl.7: **H04N 5/262**, H04N 5/46,
G09G 5/36, G09G 3/20

(21) Application number: **99959699.2**

(22) Date of filing: **08.12.1999**

(86) International application number:
**PCT/JP99/06874**

(87) International publication number:
**WO 00/60851 (12.10.2000 Gazette 2000/41)**

(84) Designated Contracting States:
**AT BE CH CY DE DK ES FI FR GB GR IE IT LI LU MC NL PT SE**

(30) Priority: **31.03.1999 JP 9441899**

(71) Applicant: **Fujitsu General Limited
Kawasaki-shi, Kanagawa-ken 213-8502 (JP)**

(72) Inventors:
• **ONODERA, Junichi
Kawasaki-shi Kanagawa 213-8502 (JP)**
• **AIDA, Toru
Kawasaki-shi Kanagawa 213-8502 (JP)**
• **OHMORI, Hideyuki
Kawasaki-shi Kanagawa 213-8502 (JP)**

(74) Representative: **Rackham, Stephen Neil et al
GILL JENNINGS & EVERY, Broadgate House, 7
Eldon Street
London EC2M 7LH (GB)**

### (54) CIRCUIT FOR MAGNIFYING/DEMAGNIFYING IMAGE

(57) A circuit for magnifying/demagnifying an image comprising a first selector (30) for selecting either the sum of the remainder of a preset magnification/demagnification step value, a first D flip-plop circuit (36) for adding/subtracting the output of the first selector (30) to/from a preset magnification/demagnification initial value for each dot and/or for each line and outputting the result, a second selector (40) for selecting either the sum or remainder of the magnification/demagnification value based on the output of the first D flip-flop circuit (36), a second D flip-flop circuit (44) for adding/subtracting the output selected by the second selector (40) to/from a preset initial magnification power signal for each dot and/or for each line and outputting the result to a magnifying/demagnifying section (46), whereby the magnification or demagnification power is changed for each dot and/or for each line so as to generate a smoothly-changing image giving no strange feeling.

Fig. 1

## Description

### TECHNICAL FIELD

The present invention relates to a circuit for magnification/demagnification image designed for being capable of either magnifying a normal-size picture having the aspect ratio of 4:3 to an magnified picture having an aspect ratio of 16:9 for display on a wide screen of a display panel like the case of the picture for the PDP (Plasma Display Panel) or demagnifying a normal-size picture or partially magnifying or demagnifying a given picture.

### BACKGROUND ART

In recent years, those picture display units such as the wide-screen television sets having the aspect ratio of 16:9 and the picture display units using the PDP's are on the increase. In order for a source picture having the aspect ratio of 4:3 to be displayed fully (or in full display mode) on the screen of a picture display unit having the aspect ratio of 16:9, a picture magnification data processing circuit designed for horizontally extending the source picture has to be provided.

The conventional picture magnification data processing circuit is designed on the basis that the picture display screen is divided into a plurality of areas so that the magnification or the demagnification ratio can be differentiated depending on the relative positions of the individual divided areas in such a way that the closer the areas to the central horizontal ends of the picture screen, the larger the magnification by specifying the magnification and demagnification ratio for each of the divided picture areas.

On the other hand, the prior art is required to be capable of increasing or decreasing the magnification of any specified area of the displayed picture according to the various purposes.

However, in the case of the prior art where the magnification and the demagnification ratio have to be specified for each of the divided areas entails a problem that the smoothness of the continuity of the picture tend to be spoiled at the boundaries of the divided areas. Besides, another problem of the prior art is that it is not designed to be capable of freely setting the magnification of specified areas within a given picture according to various purposes.

The first object of the present invention is to solve the problem of the prior art, such that the smoothness of the continuity of the picture tends to be spoiled at the boundaries among the divided areas when the magnification ratio or the demagnification ratio is specified for each of the divided areas, by enabling the magnification and the demagnification ratio to be varied on the basis of a single dot/or a single line to obtain smoothly varying harmonious picture.

The second object of the present invention is to enable a picture to be magnified or demagnified smoothly not only horizontal direction but also in vertical direction.

The third object of the present invention is to enable the magnification of the specified area of a displayed picture to be increased or decreased or to enable the magnification or the demagnification ratio to be varied after having been set previously.

### DISCLOSURE OF THE INVENTION

The present invention is designed so that the step value for magnifying or demagnifying the picture by stages, the initial value representing the reference point for magnifying or demagnifying a picture, for example, the center detection signal for magnifying a demagnified picture or demagnifying a magnified picture, can be given in advance, and so that the magnification and demagnification ratio can be computed to be fed to the magnification/ demagnification data processor for processing for magnification or demagnification of the picture.

The magnification/demagnification data processor performs the data processing for the magnification or demagnification of the picture when the magnification or demagnification ratio is given by the circuit according to the present invention.

For the ratios of magnification and demagnification upper limit value and lower limit value can be given to limit both the magnification and the demagnification.

The circuit according to the present invention enables the magnification and demagnification in horizontal direction only, the magnification and demagnification in both horizontal direction and vertical direction, changing the ratios of magnification and demagnification even after the ratios have been set, giving initial coefficients for smooth magnification and demagnification, and freely setting the point of inflection.

More specifically, the present invention relates to a picture magnification and demagnification circuit 46, designed for processing the digital video signals inputted to the data input terminal 10 thereof for the magnification and/or demagnification of the picture, comprising a first selector 30, for selecting either a value to be added or a value to be subtracted which are inputted to an input terminal 12 for receiving the step value for magnification or demagnification, a first D flip-flop circuit 36, for adding the output of the first selector 30 to the previously set initial value for magnifying or demagnifying the same from the previously set initial value for demagnification, a second selector 40, for selecting either the value to be added for magnification or the value to be subtracted for demagnification based on the output of the first D flip-flop circuit 36, and the second D flip-flop circuit 44 for adding the output, selected by the second selector 40, to a predetermined initial magnification signal or subtracting the same therefrom for output to the magnification/ demagnification data processor.

With the arrangement described above, for the left-end of the picture, the inputted initial magnification signal is first outputted to the magnification data and demagnification data processor from the second D-type flip-flip circuit, and, based on this outputted value, the first-dot image data is processed for output for the magnification of the picture.

For the dot number 2, the initial value is inputted to the first D flip-flip circuit 36. While the center detection signal has not been inputted, with the second selector 40, the product of the multiplication made by a multiplication circuit is selected and outputted to an addition circuit 42, where the product is added, and the magnification signal is outputted to the magnification/ demagnification data processor 46, where the video signal is processed for magnification of the picture and outputted.

By following the procedure described below, the magnification of the central area of the picture can be demagnified to a minimum.

When the center detection signal is inputted to the first selector 30 and the second selector 40 respectively, the values of the magnification step and demagnification step become +. As a result, with the first selector 30 and the second selector 40, the + side is selected respectively. Therefore, as the dot number progresses, the magnification increases by being added, and, when the right-side end of the picture is reached, a maximum magnification signal from the second D flip-flop circuit 44 is outputted to the magnification/ demagnification data processor 46, where the video signal is processed for magnification of the picture according to the received signal and outputted.

## BRIEF DESCRIPTION OF THE DRAWINGS

Fig. 1 is a block diagram showing the circuit for magnification/ demagnification image according to the present invention.
Fig. 2 is a block diagram showing a variation of the picture magnification and demagnification circuit as in Fig. 1.
Fig. 3 is a tabulation of the output values of various parts as in Fig. 1.
Fig. 4 is a diagram graphically showing the magnification characteristic in the case where the data for horizontal direction is processed.
Fig. 5 is a block diagram showing the system for processing the data for the horizontal direction of the picture as the second embodiment of the present invention.
Fig. 6 is a block diagram showing the system for processing the data for the vertical direction of the picture as the second embodiment of the present invention.

Fig. 7 is a diagram graphically showing the magnification characteristic in the case where the data for vertical direction is processed as in Fig. 6.
Fig. 8 is a tabulation of the output values of various parts of second embodiment; (a) is a tabulation of the output values of the various parts as in Fig. 5, a block diagram of the system for processing the data for the horizontal direction of the picture; (b) is a tabulation of the output values of various parts as in Fig. 6, a block diagram of the system for processing the data for the vertical direction of the picture.
Fig. 9 is a block diagram showing the third embodiment of the present invention.
Fig. 10 is a tabulation of the output values of various parts shown in Fig. 9.
Fig. 11 is a diagram showing the magnification characteristic in the case where the data for horizontal direction is processed as in Fig. 9.
Fig. 12 is a block diagram showing the fourth embodiment of the present invention.
Fig. 13 is a block diagram showing the fifth embodiment of the present invention.
Fig. 14 is a diagram showing the point of inflection of the picture to be displayed set as in Fig. 13.
Fig. 15 is a diagram showing the magnification characteristic in the case where the data for horizontal direction as in Fig. 13 is processed.
Fig. 16 is a tabulation of the output values of the various parts as in the block diagram of Fig. 13.
Fig. 17 is a diagram showing the magnification characteristic in the case where the data for horizontal direction as in another embodiment shown Fig. 13 is processed.
Fig. 18 is a tabulation of the output values of various parts as in another embodiment shown in Fig. 13.

## BEST MODES FOR CARRYING OUT THE INVENTION

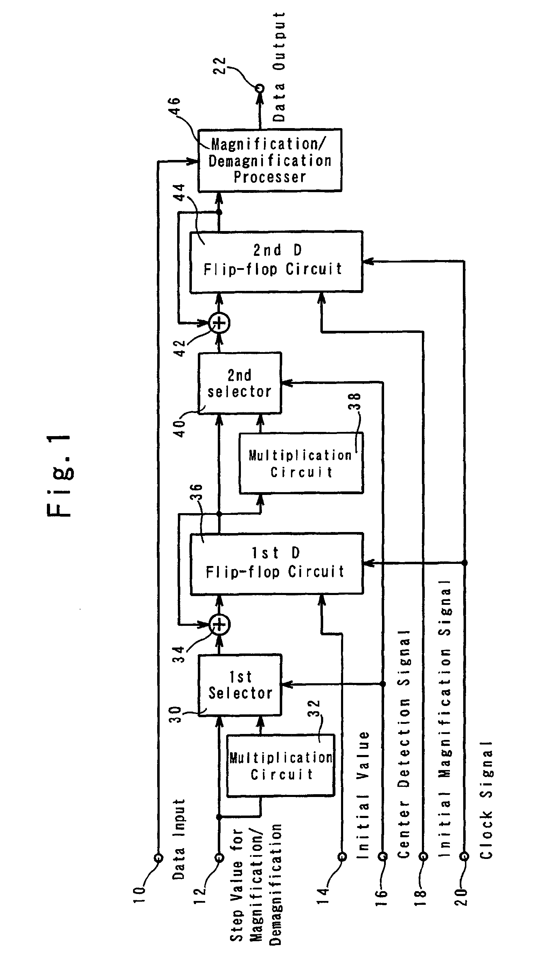

The first embodiment (Refer to Figs. 1, 2, 3 and 4):

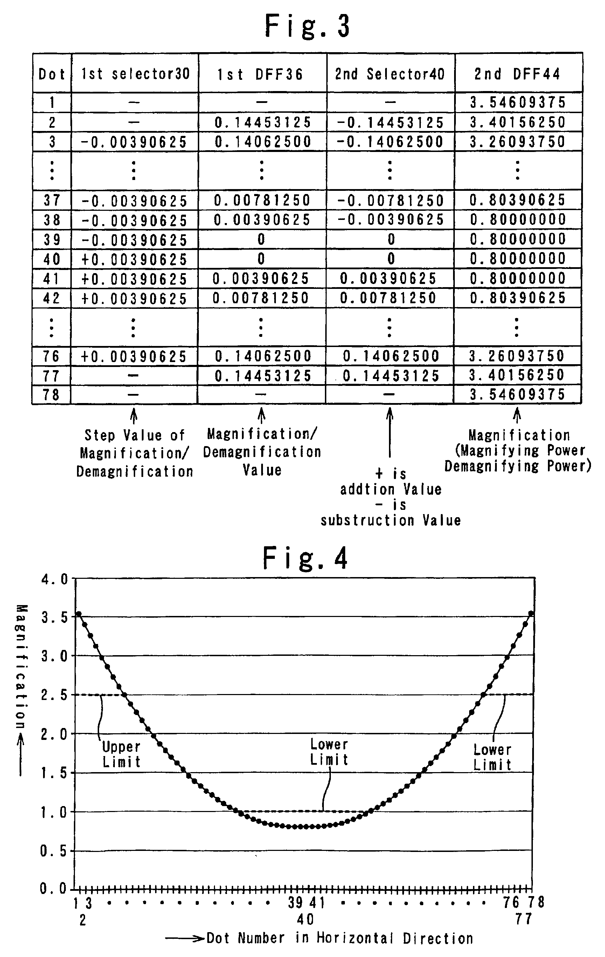

The first embodiment of the present invention, as shown in the characteristic diagram of Fig. 4, provides a circuit, shown in Fig. 1, designed so that the magnification is lowest for the central area of the displayed picture and smoothly varies towards the left-side and the right-side ends. Note that the first embodiment will be explained assuming that the number of dot is 78 in the horizontal direction of the picture to be displayed.

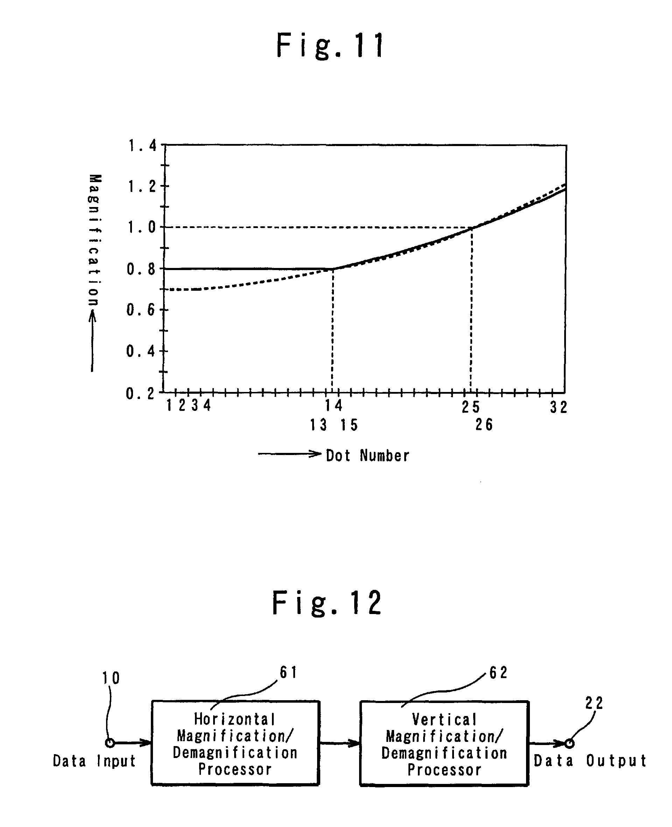

In Fig. 1, 12 represents an input terminal for inputting the step values for magnification and demagnification such as 0.00390625 (= 1/256);14, an input terminal for inputting the initial value for magnification or demagnification at the reference point on the picture to be displayed; 16, an input terminal for inputting the center detection signal when altering from magnification to demagnification or vice versa at the center of the picture; 18, an input terminal for inputting the initial magnification signal for the magnification or demagnification at the reference point on the displayed picture; 20, an input terminal for inputting the clock signal such as one synchronized with 1 dot.

32 is a multiplication circuit for multiplying the magnification/ demagnification step value, from the input terminal of the magnification/ demagnification step value, by -1. 30 represents a first selector for selecting, either the value to be added, which is given from the magnification/ demagnification step value terminal 12 when increasing the magnification, or the value to be subtracted, which is given from the multiplication circuit when demagnifying the magnification, according to the signal from the center detection signal input terminal 16; for example, as shown in the characteristic diagram of Fig. 4, the value to be subtracted, given from the multiplication circuit, is selected for the left side of the picture from the center thereof up to 39 dots as in the case shown in Fig. 3, while the value to be added, given from the magnification/demagnification step value input terminal12, is selected for the right side from 40 dots.

The first selector is connected to the first D flip-flop circuit 36 by way of an addition circuit 34. The first D flip-flop circuit 36 is synchronized with the clock signal, which is synchronized with the dot from the clock signal input terminal 20, to make addition to or subtraction from the predetermined initial value, given from the initial value input terminal 14, computing the value to be subtracted or the value to be added for output as shown in Fig. 3.

Further, the first D flip-flop circuit 36 is connected to the second selector 40 either directly or through the multiplication circuit 38; the values given in the tabulation of Fig. 3, which are to be inputted to the second D flip-flop circuit 44 selectively either directly or by way of the addition circuit 42, are outputted from the second selector 40, which selects either the values to be added, outputted from the first D flip-flop circuit 36, or the values to be subtracted, outputted from the multiplication circuit 38, according to the signal outputted from the center detection signal input terminal 16. Further, the initial magnification signal from the initial magnification signal input terminal 18 is inputted to the second D flip-flip circuit 44, where the value from the second selector 40 is added or subtracted to output either the magnification or the demagnification ratio, synchronizing with the clock signal which has been synchronized with the dot.

The second D flip-flop circuit 44 is connected to the magnification/ demagnification data processor 46, where the video signal from the data input terminal 10 is processed either for magnification or demagnification according to the magnification given from the second D flip-flop circuit 44, for output from the data output terminal 22.

As an magnification/demagnification step value A to the magnification/ demagnification step value input terminal 12, for example, a value (e.g., 0.8) slightly smaller than that of the input picture is set for the center as shown in Fig. 4, while, for example, 0.00390625 (= 1/256) is set as a value which for smooth magnification towards both ends with every dot.

For the initial value input terminal 14, an initial value, e.g., 0.14453125 (= 0.003906 x 37) is set.

When the center dot number 39 shown in Fig. 4 is detected, the center detection signal input terminal 16 outputs the center detection signal to control which of the addition or subtraction should be selected by the first selector 30 and the second selector 40.

For the initial magnification terminal 18, for example, 3.54609375 (the detail thereof in the following paragraph) is set.

The initial value B for the initial magnification signal input terminal 18 and the initial magnification D for the initial magnification signal input terminal 18 are set as described in the following.

In the case shown in Fig. 4, assuming that the initial magnification (D39, the same hereinafter) of the center dot number 39 is set to 0.8 and sequentially shifted leftward by 1 dot,

$$D39 = 0.80000000$$

$$D38 = D39 + B39 = 0.8 + 0 = 0.8$$

$$D37 = D38 + B39 = 0.8 + 1 \times A = 0.80390625$$

$$D36 = D37 + B37 = D37 + 2 \times A = 0.81171875$$

$$D2 = D3 + B3 = D3 + (38 - 2) \times A = 3.40156250$$

$$D1 = D2 + B2 = D2 + (38 - 1) \times A = 3.54609375$$

The case shown in Fig. 4 is similar to the case where (the initial magnification) is sequentially shifted rightward by 1 dot from D40 of the center (dot number 40), and the values are as shown in Fig. 3.

The operation for the magnification/demagnification of the picture by using the circuit for magnification/demagnification image having a composition as is described above will be explained as follows.

At the dot number 1 (corresponding to leftmost end of the picture) shown in Fig. 4, 3.54609375, as an initial magnification signal C inputted from the initial magnification signal input terminal 18, is outputted from the second D flip-flop circuit to the magnification/demagnification data processor 46, where the picture data of the first dot from the date input terminal 10 is processed for magnification (according to the initial magnification signal C) and outputted from data output terminal 22.

At the dot number 2, 0.14453125, as the initial value B inputted from the initial value input terminal 14 is inputted to the first D flip-flop circuit 36. Unless the center detection signal is not inputted from the center detection signal input terminal 16, -0.14453125, the product of (the inputted value) and -1 obtained by the multiplication circuit 38, is selected for output; 3.4015625, the sum of 3.54609375 and -0.1445321 obtained by the addition circuit 42, is outputted, as the magnification signal C, to the magnification/ demagnification data processor 46, where the data of the second dot from the data input terminal 10 is processed for magnification (according to the magnification signal C) for output from the data output terminal 22.

Similarly, the magnification can be decreased gradually; for example, at dot number 28, magnification is equivalent to C = 1.01484375, while at dot number 29, magnification decreases to become equivalent to C = 0.97578125. Further, at dot numbers 38 and 39, demagnification ratio becomes to a minimum equivalent to C = 0.8.

At dot numbers 39 and 40, the center detection signal from the center detection signal input terminal 16 is inputted to the first selector 30 and the second selector 40 respectively to make the magnification/demagnification step value positive. Therefore, a positive side is selected by both the first selector 30 and the second selector 40. Thus, as the dot number progresses, the magnification rises by additions as are indicated in Fig. 3 and Fig. 4; At the dot number 78, the rightmost end of the picture, the second D flip-flop circuit 44 outputs C = 3.54609375 to the magnification/demagnification data processor 46, where the data from the data input terminal 10 is processed for magnification according to the inputted value and is outputted from the data output terminal 22.

In the case of the circuit given in Fig. 1, as illustrated in Fig. 3 and Fig. 4, the circuit is designed so that the maximum magnification C is 3.54609375 near the left-side and right-side ends of the picture, while the same is 0.8 near the center of the picture.

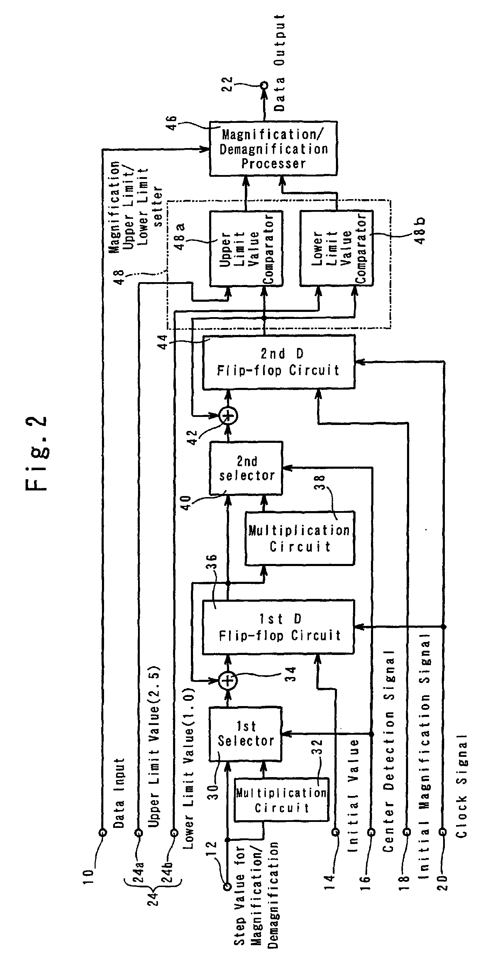

However, as shown in Fig. 2, it is also possible to control the magnification so that it will not exceed or fall below a predetermined value by setting an upper limit value and a lower limit value by inserting a magnification limit (upper limit and lower limit) setter 48 between the second D flip-flop circuit 44 and the magnification/ demagnification data processor 46.

For instance, where an upper limit value 2.5 is inputted to upper limit value input terminal 24a of the upper limit value/lower limit value input terminal 24, even when the output from the second D flip-flop circuit 44 is found to be greater than 2.5 by upper limit value comparator 48a of the magnification upper limit/lower limit setter 48, the upper limit value can be controlled to 2.5, and, where a lower limit value 1.0 is inputted to lower limit value input terminal 24b, even if the output from the second D flip-flop circuit 44 is found to be lower than 1.0 by lower limit value comparator 48b of the magnification upper limit/lower limit setter 48, the lower limit value can be controlled to 1.0. Therefore, as indicated by the characteristic represented by the dotted curve in Fig. 4, (the upper limit value of the magnification) is controlled to 2.5 at the dot numbers 1 through 8 and the dot numbers 71 through 78, while (the lower limit value of the magnification can be controlled to 1.0 at dot numbers 29 through 50.

In the case of the above-mentioned first embodiment, the explanation is made assuming that the horizontal direction of the picture consists of 78 dots, but, since the number of dots varies depending on the size and the type of the picture, the magnification/demagnification step value also varies accordingly. For instance, if the horizontal direction of the picture is 780 dots, 10 times the case of the first embodiment, the magnification/demagnification step value has to be set to 0.000390625, 1/10 of that in the case of the first embodiment.

Although the first embodiment is designed so that the magnification is highest for both the left-side and right-side end portions, while the same is lowest for the central portion thereof, this may be reversed so that the magnifications for both the left-side and right-side end portions are lowest, while the same for the central portion is highest, or either the highest or lowest magnification may be applied to any portion other than the central portion.

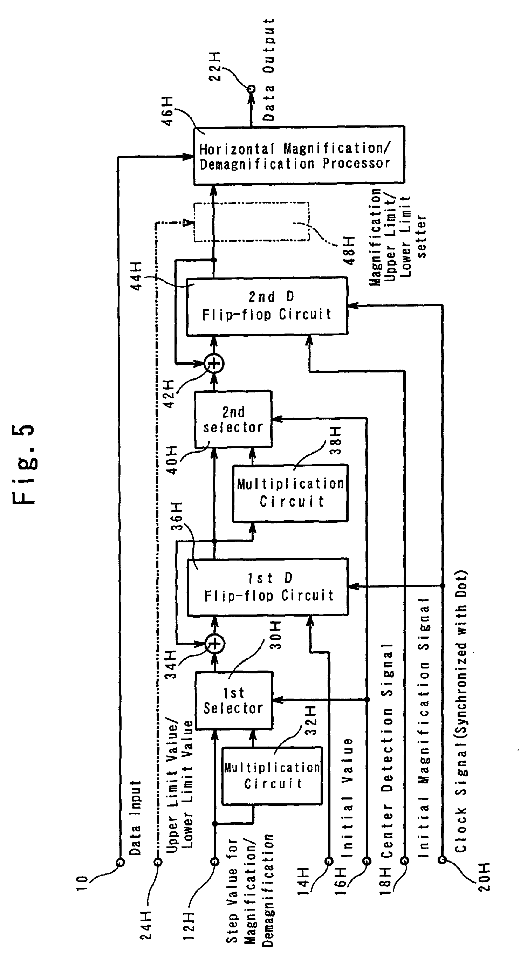

The second embodiment (Refer to Figs. 5, 6, 7 and 8)

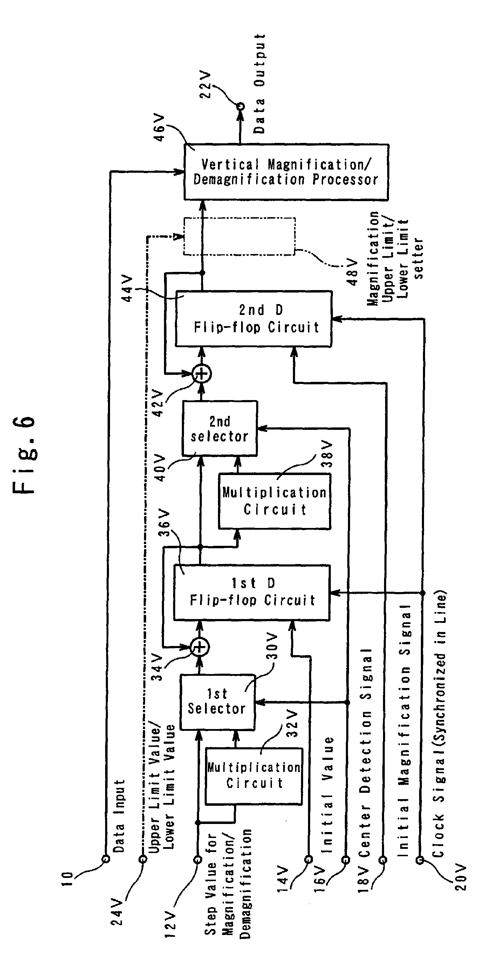

The second embodiment of the present invention is designed so that not only both the ratios of the magnification and demagnification are varied smoothly for every dot similarly to the case of the first embodiment but also the both for the vertical direction too are varied smoothly for every line; the specific composition of the related circuit is shown in Fig. 5 and Fig. 6

Fig. 5 shows the circuit designed for smoothly varying the ratio of magnification/demagnification ratio for every dot in horizontal direction, wherein data input terminal 10, magnification/demagnification step value input terminal 12H, initial value input terminal 14H, center detection signal input terminal 16H, initial magnification signal input terminal 18H, clock signal input terminal 20H, data output terminal 22H, upper/lower limit value input terminal 24H, first selector 30H, multiplication circuit 32H, addition circuit 34H, first D flip-flip circuit 36H, multiplication circuit 38H, second selector 40H, second D flip-flop circuit 44H, magnification/demagnification data processor 46H and magnification upper/lower limit setter 48H are respectively similar to those given in Fig. 1 and Fig. 2 respectively corresponding to the first embodiment.

The horizontal magnification/demagnification data processing by using the circuit for magnification/ demagnification image is similar to that of the first embodiment, and so the explanation thereof will be made briefly.

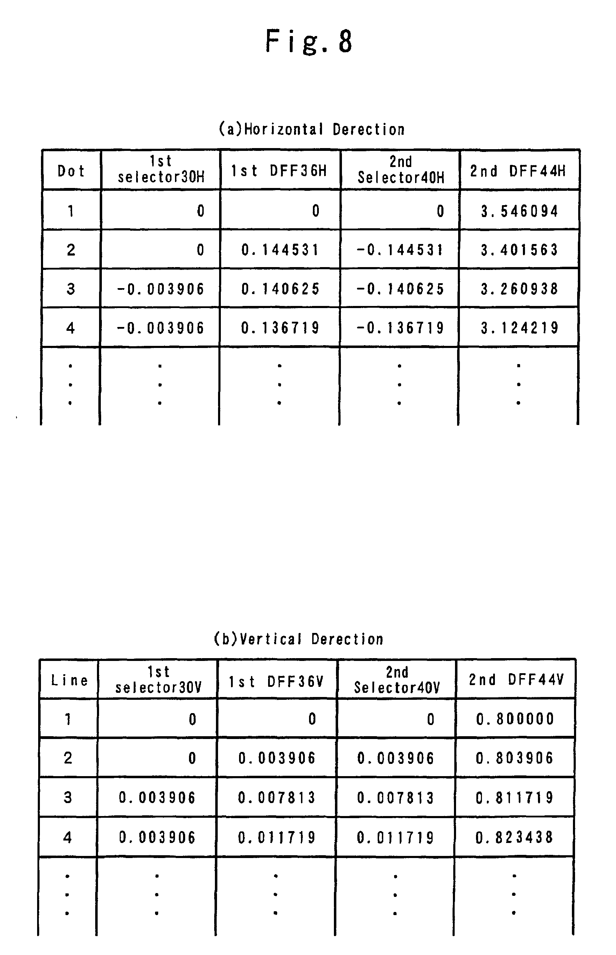

The various values to be set for the horizontal magnification/ demagnification of the picture, assuming that the number of dots in horizontal direction is 78, are 0.003906 for the magnification/ demagnification step value, 0.144531 for the initial value, and 3.546094 for the initial magnification. In the case of the first embodiment, 8 figures after the decimal point are used as shown in Fig. 3, while 6 figures after the decimal point are used in the case of the second embodiment as shown in Fig. 8 (a) and (b), but these values are substantially identical.

Therefore, the horizontal magnification/demagnification data processing according to the second embodiment is entirely identical with that according to the first embodiment, and the same can be said as to the magnification in terms of the dot as indicated by the characteristic diagram of the first embodiment shown in Fig. 4.

The content of the data processing in the case where the magnification upper/lower limit setter 48H is inserted between the second D flip-flop circuit 44H and the magnification/demagnification data processor 46H is also identical with that in the case of the first embodiment.

Further, as in Fig. 5, the content of the data processing in the case where the magnification upper/lower limit setter 48H is inserted between the second D flip-flop circuit 44H and the magnification/demagnification data processor 46H is also identical with that in the case of the first embodiment.

Fig. 6 shows a circuit designed for smoothly varying the magnification/ demagnification ratio in vertical direction for each line, wherein data input terminal 10, magnification/demagnification step value input terminal 12V, initial value input terminal 14V, center detection signal input terminal 16V, initial magnification signal input terminal 18V, clock signal input terminal 20V, data output terminal 22V, upper/lower limit value input terminal 24, first selector 30V, multiplication circuit 32V, addition circuit 34V, first D flip-flop circuit 36V, multiplication circuit 38V, second selector 40V, addition circuit 42V, second D flip-flop circuit 44V, magnification/ demagnification data processor 46V, and magnification upper/lower limit setter 48V are basically similar to those shown in Fig. 1 and Fig. 2 except various set values, which will be given later.

The vertical magnification/demagnification data processing by using the circuit for magnification/demagnification image composed as described above will be explained below.

The various values to be set for the vertical magnification/ demagnification, assuming the number of lines in vertical direction is 78, are, as shown in Fig. 8 (b), 0.003906 for the magnification/demagnification step value, 0 for the initial value, and 0.8 for the initial magnification.

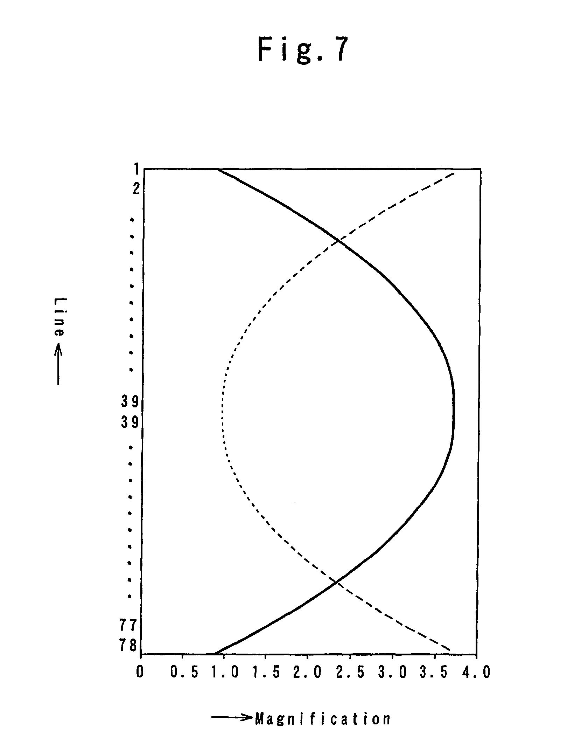

In the case of the second embodiment, the vertical magnification/ demagnification data processing is basically similar to that in the case of the first embodiment, though the former is for horizontal direction while the latter is for vertical direction; concerning the magnification for each line, as represented by a solid line in Fig. 7, the magnification for the top line and the bottom line is 0.8 times, while the magnification for the lines 39 and 40, intermediate lines, is 3.546094 times, forming a parabola.

Further, concerning the various values to be set for the vertical magnification/demagnification data processing, if the values are set identically with those in the case shown in Fig. 8 (a), i.e., 0.003906 for the magnification/ demagnification step value, 0.144531 for the initial value, and 3.546094 for the initial magnification, the magnifications for the lines are 3.546094 times for the top line and the bottom line and 0.8 times for the lines 39 and 40, the intermediate lines, as represented by a dotted line in Fig. 7.

When the horizontal magnification/demagnification data processing as is illustrated in Fig. 4 and the vertical magnification/demagnification data processing as is represented by the solid line or dotted line in Fig. 7 are made by using the circuit shown in Fig. 5, a more smooth and more comfortable-to-eye picture can be produced.

In the cases of the circuits shown in Fig. 5 and Fig. 6, as illustrated in Fig. 4 and Fig. 7, the maximum magnification C is set to 5.54609375 and to 0.8 near the central portion.

However, as indicated by the 2-dot-dash line in Fig. 5 and Fig. 6, by inserting the magnification upper/lower limit setter 48H between the second D flip-flop circuit 44H and the magnification/demagnification data processor 46H and inserting the magnification upper/lower limit setter 48V between the second D flip-flop circuit 44V and the magnification/demagnification data processor 46V, the upper limit and lower limit values can be set so that the values will not exceed or falls short of the predetermined value.

The second embodiment is described assuming that 78 dots are allocated to the horizontal direction of the picture and 78 lines to the vertical direction of the picture, but, since the number of dot and the number of line vary depending on the size and type of picture and so the magnification/ demagnification step value also varies accordingly.

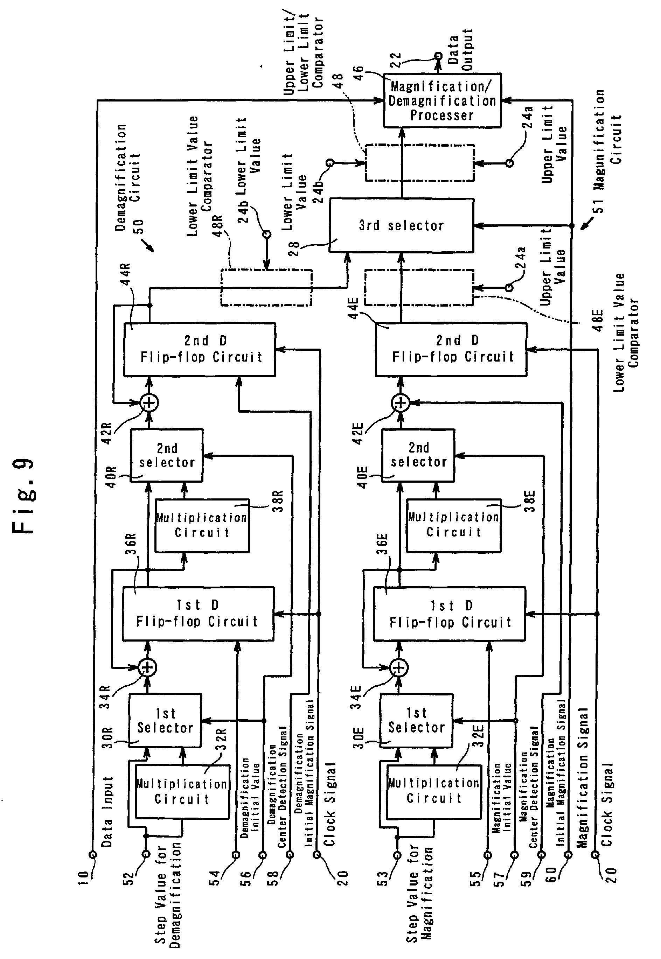

The Third Embodiment (Figs. 9, 10 and 11)

The third embodiment of the present invention is designed for enabling the once predetermined magnification/demagnification step value of a given picture to be altered even when the program is in progress so that excessive magnification or demagnification can be prevented to smoothly obtain a desired picture quality.

More particularly, since the step value for magnification and that for demagnification are set constant values as in the case of the first embodiment shown in Fig. 4 and in the case of the second embodiment shown in Fig. 7, the values can be increased or decreased only in fixed ratios, which are determined only on a primary basis. Hence, the magnification or demagnification greater than expected occurs for the peripheral portion or the central portion. For this reason, the occurrence of unnatural magnification is controlled by setting the upper limit value and the lower limit value.

However, even such measures leaves a problem, that is, the lack of smoothness along the boundaries.

Thus, according to the present invention, the circuit designed for providing the magnification for magnification and the circuit designed for providing the magnification for demagnification are separated so that when the magnification is below the predetermined value (e.g., 1), the circuit for the magnification for demagnification is selected, while when the magnification is above the predetermined value (e.g., 1), the circuit for the magnification for magnification is selected, the details of which are shown in Fig. 9.

In Fig. 9, 50 represents the circuit for demagnification, while 51 represents the circuit for magnification, of which the circuit 50 for demagnification is selected by the third selector 28 when the magnification detection signal from the magnification signal input terminal is below the predetermined value (e.g., 1), while the circuit for magnification 51 is selected when the magnification is above the predetermined value (e.g., 1).

The circuit for demagnification 50 comprises not only various terminal such as a demagnification step value input terminal 52, an initial value for demagnification input terminal 54, a center detection signal for demagnification input terminal 56, an initial coefficient for demagnification input terminal 58, a demagnification clock signal input terminal 20 but also a first selector 30, a multiplication circuit 32R, an addition circuit 34R, a first D flip-flop circuit 36R, a multiplication circuit 38R, a second selector 40R, an addition circuit 42R, a second D flip-flop circuit 44R and, if necessary, the magnification lower limit setter 48R. The composition of this circuit is basically similar to that of the circuit shown in Fig. 1.

The circuit for magnification 51 comprises not only various terminals such as an magnification step value input terminal 53, an magnification initial value input terminal 55, a center detection signal for magnification input terminal 57, an magnification initial coefficient input terminal 59, a clock signal input terminal 20 but also a first selector 30E, a multiplication circuit 32E, an addition circuit 34E, a first D flip-flip circuit 36E, a multiplication circuit 38E, a second selector 40E, an addition circuit 42E, a second D flip-flip circuit 44E, and, if necessary, a magnification upper limit setter 48E. The composition of this circuit is basically similar to that of the circuit shown in Fig. 1.

The processing for the magnification and demagnification by using the circuit for magnification and the circuit for demagnification according to the third embodiment of the present invention will be described below referring to Fig. 9.

The circuit for demagnification 50 is set to 179/256 = 0.699219 when 0.25 is given as the demagnification step value to the input terminal 52; 0 as the initial value for demagnification to the input terminal 54; 179 (initial magnification for demagnification) as the initial coefficient to the input terminal 58.

On the other hand, the circuit for magnification 51 is set to 256 (to 256/256 = 1 when to be given as initial magnification for demagnification) when 6 is given as the step value for magnification is given to the input terminal 53; 3 as the initial value for magnification to the input terminal 55; 256 as the initial coefficient to the input terminal 59.

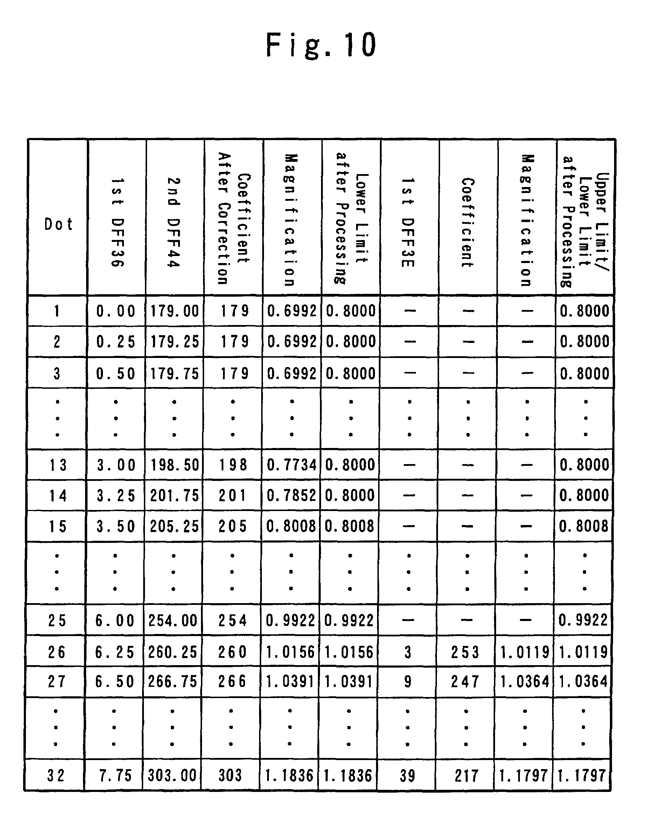

Fig. 11 is a magnification characteristic diagram representing the left-side half (32 dots) from the center of a 64-dot picture; in this case, the first selector 30R receives the input of the step value 0.25 for demagnification from the input terminal 52; as shown in Fig. 10, the values, 0, 0.25, 0.5, 0.75, ⋯, obtained by sequential addition are output from the first D flip-flip circuit; being in the direction for increase, +0, +0.25, +0.5, +0.75, ⋯ are output from the second selector 40R; as shown in Fig. 10, the coefficients for demagnification, 179, 179.25, 179.5, 179.75, ⋯, obtained by adding 179, are outputted from the second D flip-flop circuit 44R. Further, the coefficients rounded to the nearest whole numbers may be substituted for these coefficients as shown in Fig. 10.

Since the coefficients are for demagnification until the output from the second D flip-flop circuit 44R reaches 256, the third selector 28 selects the output of the second D flip-flop circuit 44R of the circuit for demagnification 50.

If the output from the circuit for demagnification 50 is selected, and the 26th dot is passed, an magnification more than expected results as represented by the dotted parabola in Fig. 11.

When the output from the second D flip-flip circuit 44R reaches 256, the magnification signal from the magnification signal input terminal 60 becomes 1, and as a result, the third selector 28 selects the circuit for magnification 51 instead of the circuit for demagnification 50.

As discussed in the above, since the step value of the input terminal 53 is set to 6, while the initial value for magnification of the input terminal is set to 256 (to 256/256 = 1 when to be given as the initial magnification for demagnification), the step value 6 for magnification inputted from the input terminal 53 is outputted from the first selector 30E; 3, 9, 15, 21, ⋯, obtained by sequential addition, are outputted from the first D flip-flop circuit; -3, -9, -15, -21, ⋯ are output from the second selector 40E; the coefficients 253, 247, 241, 235, ⋯, obtained by subtraction from 256, are outputted from the second D flip-flip circuit 44E (these coefficients are also rounded to the whole numbers).

The coefficients 179, 179, 179, 179, 180, ⋯ rounded to the whole numbers, are outputted from the second D flip-flop circuit 44R.

Since the coefficient for demagnification = magnification for demagnification x 256, the magnification/demagnification data processor 46 operates when the coefficient for demagnification, 179 = magnification for demagnification, 0.6992, and the coefficient for demagnification, 180 = magnification for demagnification, 0.7031.

Further, the second D flip-flop circuit 44E outputs the coefficients 253, 247, 241, 235, ⋯, which have been rounded to the whole numbers. Since the coefficient for magnification = 256/magnification for magnification, the magnification/demagnification data processor 46 operates when the coefficient for magnification, 253, = magnification for magnification, 1.0119, and the coefficient for magnification, 247, = magnification for magnification, 1.0346.

In consequence, when the magnification exceeds 1 for the right-side of the 26th dot, the magnification for magnification is represented by a gentle curve to produce a natural picture as shown in Fig. 11.

In the case of the circuit shown in Fig. 9, when the magnification for demagnification and the magnification for magnification remain at too high a level respectively, the magnification upper limit/lower limit setter 48 is inserted between the third selector 28 and the magnification/demagnification data processor 46, or the magnification lower limit setter 48R is inserted between the second D flip-flop circuit 44R and the third selector 28, and the magnification upper limit setter 48E is inserted between the second D flip-flop circuit 44E and the third selector 28.

In other words, in the case shown in Fig. 11, when setting the lower limit value of the magnification for demagnification to 0.8, the coefficient for demagnification in the second D flip-flop circuit can be prevented from becoming too small by inputting, from the lower-limit input terminal 24b, the coefficient for demagnification, 240.8, which is equivalent to the lower limit value 0.8. Similarly, when the upper limit value of the magnification for magnification is set to 1.5, the coefficient for magnification of the second D flip-flop circuit 44E can be prevented from becoming too high, by inputting, from the upper limit value input terminal 24a, the coefficient for magnification 170.7 which corresponds to the upper limit value, 1.5.

Further, similarly to the second embodiment shown in Fig. 2, the magnification upper limit/lower limit setter 48, the magnification lower limit setter 48R and the magnification upper limit setter 48E are respectively composed of a upper limit/lower limit comparator, a lower limit value comparator and an upper limit value comparator.

Fourth Embodiment (Fig. 12)

In the case of the third embodiment of the present invention, only the horizontal direction is corrected, while in the case of the fourth embodiment, it is designed that the correction in horizontal direction is simultaneously with the correction in vertical direction.

In Fig. 12, 10 represents a data input terminal, and a horizontal magnification/demagnification data processor 61 and a vertical magnification/ demagnification data processor 62 are inserted in series between the data input terminal 10 and the data output terminal 22.

The horizontal magnification/demagnification data processor 61 is composed of a circuit similar to one in the case of the third embodiment shown in Fig. 9, but the magnification/demagnification data processor 46 is only for the horizontal magnification/demagnification data processing.

The magnification/demagnification data processing operation by the horizontal magnification/demagnification data processor 61 is identical with that in the case of the third embodiment, and, similarly to the case shown in Fig. 11, the magnification and the demagnification not only can be switched by a specific magnification signal but also limited by the upper limit value and the lower limit value.

Further, the vertical magnification/demagnification data processor 62 is composed of a circuit similar to that in the case of the third embodiment except that the signal synchronized with the line is inputted to the clock signal input terminal 20; the magnification/demagnification data processor 46 carries out the vertical magnification/demagnification data processing.

The vertical magnification/demagnification data processing operation by the vertical magnification/demagnification data processor 62 is basically similar to that in the case of the third embodiment, except that the 1 dot is replaced with 1 line, and is represented by a magnification characteristic curve obtained by rotating 90° the axes of the diagram shown in Fig. 11.

In this way, the horizontal magnification/demagnification data processing shown in Fig. 11 and the vertical magnification/demagnification data processing in the direction rotated 90° from the horizontal direction are made simultaneously to produce a smoother and easy-to-see picture.

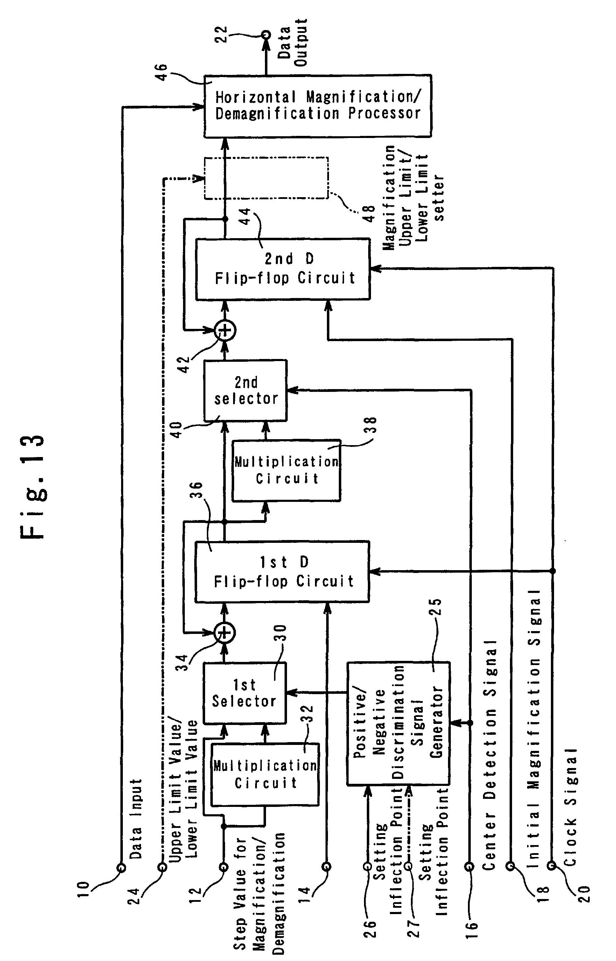

Fifth Embodiment (Figs. 13, 14, 15, 16 and 17)

The first, second, third and fourth embodiments of the present invention are designed so that the variable coefficients for magnification and demagnification simply decrease, like a curve of secondary degree, towards the center of the picture while either simply increasing, like a curve of secondary degree, towards the sidewise ends of the picture or simply decreasing, like a curve of secondary degree, towards sidewise ends of the picture. This system, therefore, gives rise to a problem such that the peripheral portion or the central portion of the picture is magnified excessively.

In the fifth embodiment of the present invention, not only the step values, initial values and initial magnification for magnification and demagnification are predetermined but also the values of 1 or more points of inflection are predetermined freely for the calculations of the magnifications for magnification and demagnification for each dot, thereby enabling the variation to occur more smoothly. The results of such calculations are inputted to the magnification/demagnification data processor for the processing for magnification or demagnification. The magnification/ demagnification data processor is a circuit designed for obtaining any desired magnification or demagnification when the desired magnification for magnification or demagnification is given. Further, the magnification upper limit/lower limit setter may be provided immediately before the magnification/ demagnification data processor to control the magnification for magnification and demagnification.

The fifth embodiment of the present invention show in Fig. 13 is a circuit basically similar to the circuit shown in Fig. 1, but is compositionally characteristic of that a positive/negative discrimination signal generator 25 is inserted between the center detection signal input terminal 16 and the first selector 30, and the positive/ negative discrimination signal generator 25 is provided with the first point of inflection signal input terminal 26.

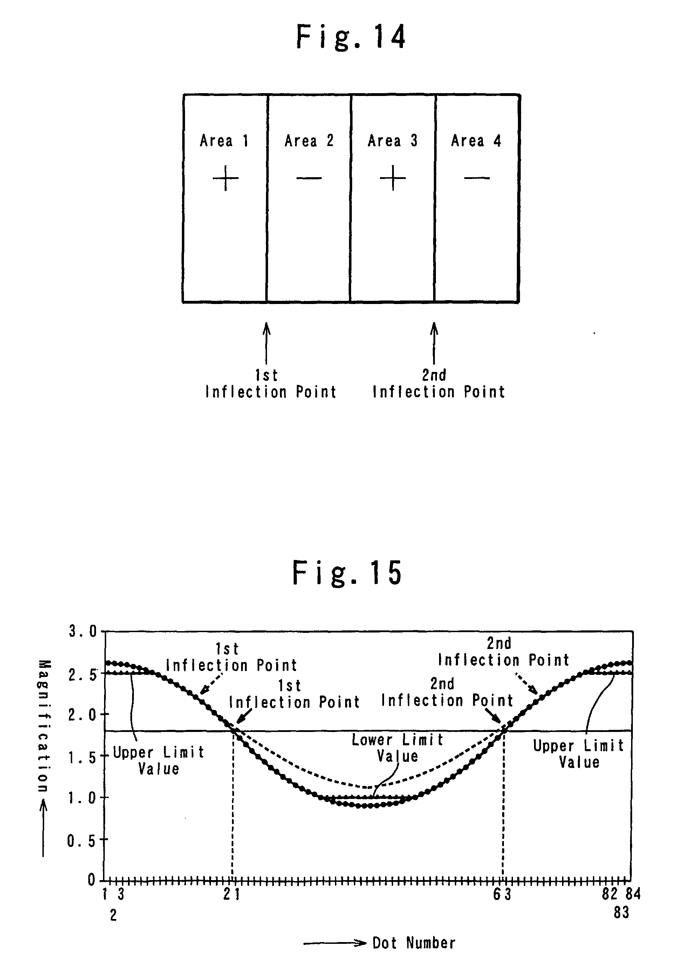

In such a composition, as shown in Fig. 14, the first point of inflection is provided at the center of the left-side half of the picture to be displayed, while the second point of inflection is provided at the center of the right-side half of the picture. The positive step values for magnification and demagnification are selected in the range 1 separated by the first point of inflection, center point and the second point of inflection; negative values in the range 2; positive values in the range 3; negative values in the range 4.

Further, for instance, the step values for magnification and demagnification to the input terminal 12 are set to 0.00390625, the initial value to the input terminal 14 to 0.003990625, and initial magnification to input terminal 16 to 2.61875 respectively.

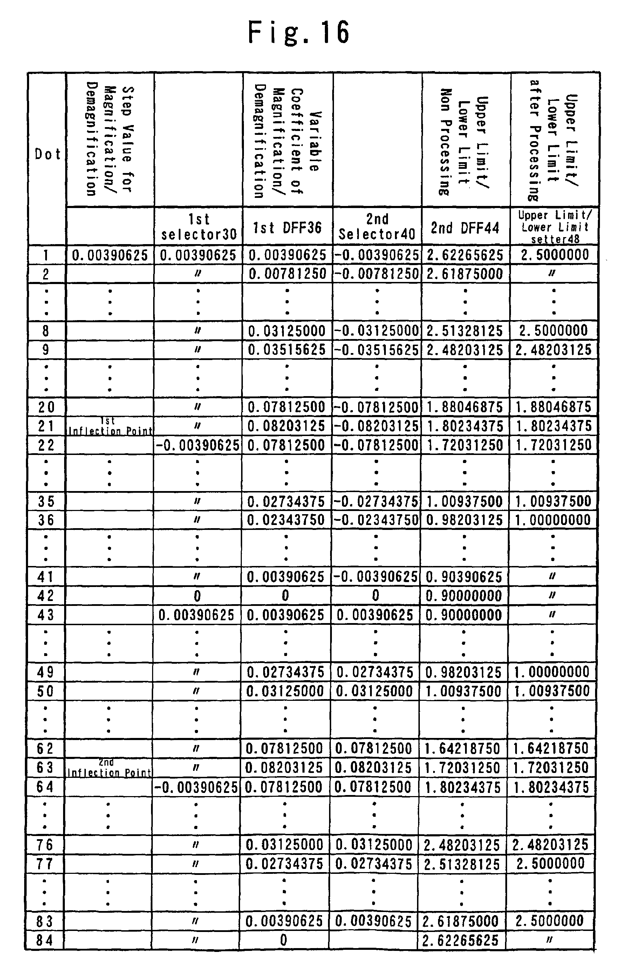

When the values such as those discussed above are set, the output values of the first D flip-flop circuit, the second selector 40 and the second D flip-flop circuit are as shown in Fig. 16.

As seen from Fig. 16 and Fig. 15, which shows the magnification characteristic curve, in the range 1, which covers the first dot through the 21st dot, the step values for magnification and demagnification are selected directly from the input terminal 12, and the variable coefficient, as the output from the first D flip-flop circuit, in + direction in which the coefficient increases gradually. When the signal for setting the first point of inflection is inputted from the input terminal 26, the magnification/ demagnification step is selected through the input terminal and the multiplication circuit 32 in the range 2 to cause the variable coefficient, as the output from the first D flip-flop circuit, to vary in negative direction for gradual decrease.

When the variable coefficient has become 0 at 42nd dot, the center detection signal from the input terminal 16 is inputted to the positive/ negative discrimination signal generator 25, while, in the range covering 43rd dot to 63rd dot, the step value for magnification/ demagnification is selected directly from the input terminal 12, causing the variable coefficient, as being the output from the first D flip-flop circuit 36, to vary in positive direction for gradual increase. When the signal for setting the point of inflection is inputted from the second inflection point setting signal input terminal 27, the variable coefficient, as being the output from the first D flip-flop circuit 36 coming from the input terminal 12 and the multiplication circuit 32, varies in negative direction for gradual decrease.

As seen from Fig. 13, when it is assumed that the magnification upper limit/lower limit setter 48 is inserted between the second D flip-flop circuit 44 and the magnification/demagnification data processor 46, and the upper limit is set to 2.5 while the lower limit is set to 1.0, as seen from Fig. 16 and Fig. 15, (the upper limit is) held to 2.5 within the range from the 1st dot to the 8th dot where the output of the second D flip-flop circuit exceeds 2.5, while (the lower limit is) held to 1.0 within the range from the 36th dot to the 49th dot where the output from the second D flip-flop circuit is less than 0.1.

In the above embodiment, the points of inflection are set at the 21st and 63rd dots, but they may be set at any points, since not being limited thereto. For instance, as seen from the diagram shown in Fig. 15, the first point of inflection is set at the point intersecting the (vertical) dotted line by the input from the first inflection point setting signal input terminal 26, and another point of inflection is set at the point intersecting the (vertical) dotted line by the input from the second inflection point setting signal input terminal 27. As a result, the dotted line represents the magnification characteristic.

Even in the above case, (the magnification and the demagnification) can be limited by setting the upper limit value and the lower limit value.

In the case of the fifth embodiment of the present invention, only the correction in horizontal direction was discussed, but it is also possible to make corrections in both the horizontal and vertical direction simultaneously.

In the above case, the clock signal input terminal 20, shown in Fig. 13, receives the signal synchronized with the line, while, the magnification/ demagnification data processor 46 is made to perform the data processing for the magnification/demagnification in horizontal direction.

In the above case, the magnification/demagnification data processing operation is similar to the case of the fifth embodiment except that 1 dot is replaced with 1 line, and is represented by a magnification characteristic curve obtainable by rotating 90° the axes of the graph given in Fig. 15.

In this way, by simultaneously executing the horizontal magnification/ demagnification data processing and the vertical magnification/ demagnification data processing, differing 90° in direction, a smoother and easier-to-see picture can be produced.

In the cases of the embodiments shown in Fig. 15 and Fig. 16, the magnification is made to increase towards the horizontal ends, but the present invention is not limited to this, and so the magnification may be made to become approximately to 1 and to increase towards the center.

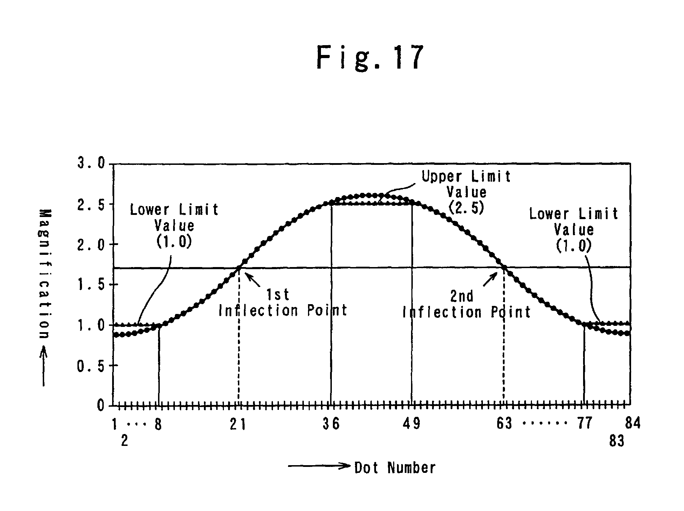

In the above cases, as shown in Fig. 17, the first point of inflection is set on the left side of the picture to be displayed, while the second point of inflection is set on the right side. The step values for magnification and demagnification are selected to become positive in the range 1 separated by the first inflection point, center point and the second inflection point; the step values to become negative, in range 2, the step values to become positive, in range 3; the step values to become negative, in range 4. The step value for magnification/demagnification to the input terminal 12 is set, for example, to 0.00390625, the initial value to the input terminal 14 to 0.00390625 and the initial magnification to the input terminal 16 to 0.9 respectively.

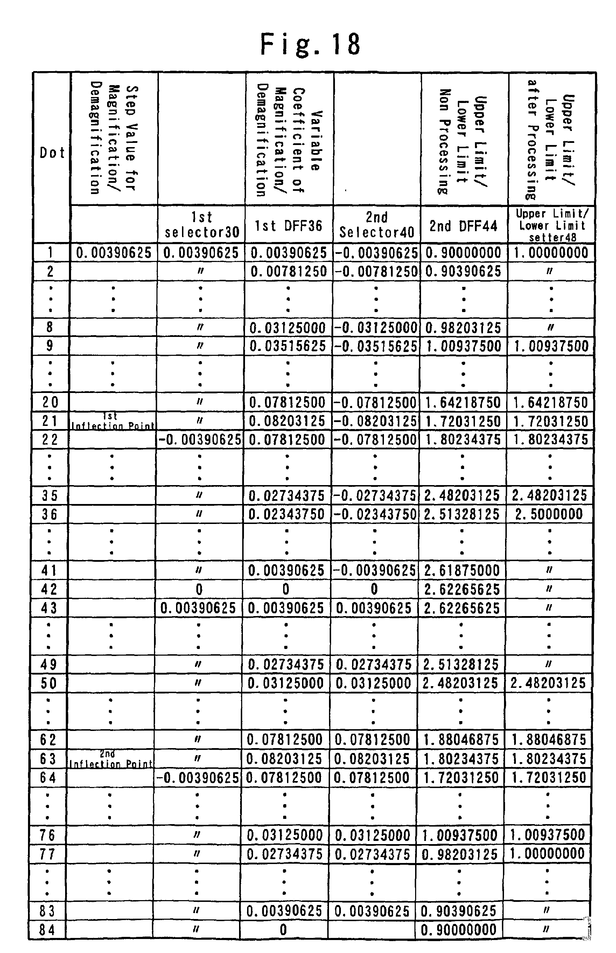

When the various values are set as described above, the output values from the first selector 30, the first D flip-flop circuit 36, the second selector 40 and the second D flip-flop circuit 44 are as shown in Fig. 18.

As seen from Fig. 18 and Fig. 17, for the magnification characteristic, the variable coefficient, as being the output from the first D flip-flop circuit 36, is set in the positive direction for gradual increase in the range 1 covering first dot through the 21st dot. When the inflection point setting signal is inputted through the first inflection point setting signal input terminal 16, the variable coefficient, as being the output of the first D flip-flop circuit, is set in the negative direction for gradual decrease within the range 2 covering the 22nd dot through the 42nd dot.

When the variable coefficient has become 0 by reaching the 42$^{nd}$ dot, the center detection signal from the center detection signal input terminal 16 is inputted to the positive/negative discrimination signal generator 25, and the variable coefficient, as being the input from the first D flip-flop circuit, is set in the positive direction for gradual increase. When the inflection point setting signal from the second inflection point setting signal input terminal 27 is inputted again, the variable coefficient, as being the output of the first D flip-flip circuit 36, is set in negative direction for gradual decrease.

In the case shown in Fig. 13, when it is assumed that the magnification upper limit/lower limit setter 48 is inserted between the second D flip-flip circuit and the magnification/demagnification data processor 46 to set the upper limit value to 2.5 and the lower limit value to 1.0, as shown in Fig. 18 and Fig. 17, the output from the second D flip-flop circuit 44 is limited to 1.0 within the range from the 1st dot to the 7th dot and the range from the 78th dot to the 84th dot where the output is less than 1.0, and it is also limited to 1.0 within the range from the 35th dot to the 50th dot where the output from the second D flip-flop circuit 44 exceeds 2.5.

## INDUSTRIAL APPLICABILITY

The circuit for magnification/demagnification image according to the present invention is suited for magnifying the digital picture having the normal aspect ratio, 4:3, to be displayed on the PDP (Plasma Display Panel) or the liquid crystal panel to the wide picture having the aspect ratio of 16:9, or vice versa, or for the partial magnification and demagnification of the picture to be displayed.

**Claims**

1. A circuit for magnification/demagnification image, designed for processing the digital video signal inputted to a data input terminal 10 (for the magnification or demagnification of a picture) by an magnification/ demagnification data processor 46 for output, comprising a first selector 30 for selecting an addend or a subtrahend, as being a predetermined step value for magnification or demagnification which has been inputted from an magnification/ demagnification step value input terminal 12, for output, a first D flip-flop circuit 36 for adding or subtracting the output of the first selector to and from a predetermined initial value for magnification or demagnification for output, a second selector 40 for selecting the addend or the subtrahend for magnification or demagnification based on the output of the first selector 30, and a second D flip-flop circuit 44 for adding or subtracting the output selected by the second selector 40 to and from the predetermined initial magnification signal for output the magnification/ demagnification data processor 46.

2. The circuit for magnification/demagnification image defined in claim 1, wherein the first D flip-flop circuit 36 and the second D flip-flop circuit 44 are designed perform the addition or subtraction according to each clock signal synchronized with a dot signal.

3. The circuit for magnification/demagnification image defined in claim 1, wherein the addend, as being the step value for magnification or demagnification, is inputted to the input side of the first selector 30 through an magnification/demagnification step value input terminal 12, while the subtrahend is inputted to a multiplication circuit 32 where the magnification/ demagnification step value from the magnification/demagnification step value input terminal 12 is multiplied by -1; the addenda, as being an addenda for magnification or demagnification from the first D flip-flop circuit 36, is directly inputted to the input side of the second selector 40, while the subtrahend is inputted through the multiplication circuit 38 where the value for magnification or demagnification is multiplied by -1.

4. The circuit for magnification/demagnification image defined in claim 1, wherein a magnification upper limit/lower limit setter 48, for controlling the magnification to the predetermined upper limit and lower limit, is inserted between the second D flip-flop circuit 44 and the magnification/ demagnification data processor 46.

5. A circuit for magnification/demagnification image, designed not only for processing the digital video signal inputted to the data input terminal 10 for the horizontal magnification and/or demagnification (of a picture) by a horizontal magnification/demagnification data processor 46H but also for the vertical magnification and/or demagnification (of a picture) by a vertical magnification/ demagnification data processor 46V, wherein the horizontal magnification and/or demagnification data processor comprises a first selector 30H for horizontal direction for selecting an addend or a subtrahend as being a predetermined horizontal magnification/demagnification step value inputted from an magnification/demagnification step value input terminal 12H, a first D flip-flop circuit 36H for horizontal direction for outputting the result of addition or subtraction of the output of the first selector 30H for horizontal direction to and from the predetermined horizontal magnification/demagnification initial value, a second selector 40H for horizontal direction for selecting the addend or the subtrahend for magnification or demagnification according to the output of the first D flip-flop circuit 36H for horizontal direction and a second D flip-flop circuit 44H for horizontal direction for adding or subtracting the output, which has been selected by the second selector 40H for horizontal direction, to and from a predetermined initial magnification signal for output to the horizontal magnification/demagnification data processor 46H, while the vertical magnification/demagnification data processor comprises a first selector 30V for selecting an addend or a subtrahend as being a predetermined vertical magnification/demagnification step value, a first D flip-flop circuit 36V for vertical direction for outputting the result of the addition or subtraction of the output of the first selector 30V for vertical direction to and from the predetermined vertical magnification/demagnification initial value, a second selector 40V for vertical direction for selecting an addend or a subtrahend for magnification or demagnification according to the output of the first D flip-flop circuit for vertical direction, and a second D flip-flop circuit for vertical direction for adding or subtracting the output selected by the second selector 40V for vertical direction to and from the predetermined initial magnification signal for output to the vertical magnification/demagnification data processor 46V.

6. The circuit for magnification/demagnification image defined in claim 5, wherein the first D flip-flop circuit and the second D flip-flop circuit, the both for horizontal direction, are designed for performing addition or subtraction according to each signal synchronized with horizontal-direction dot signal, while the first D flip-flop circuit 36V and the second D flip-flop circuit 44, the both for vertical direction, are designed for performing addition and subtraction according to each signal synchronized with vertical-direction line signal.

7. The circuit for magnification/demagnification image defined in claim 5, wherein an addend from the horizontal magnification/demagnification step value input terminal 12H is directly inputted to the input side of the first selector 30H for horizontal direction; a subtrahend from the horizontal magnification/demagnification step value input terminal 12H is inputted through the multiplication circuit 32H where the horizontal magnification/ demagnification step value is multiplied by -1; an addend, from the first D flip-flop circuit 36H for horizontal direction to the horizontal magnification/ demagnification value, is directly inputted to the input side of the second selector 40H for horizontal direction; a subtrahend, from the first D flip-flop circuit 36H for horizontal direction, is inputted through the multiplication circuit 38H where the magnification/demagnification value for horizontal direction is multiplied by -1; an addend, from the vertical magnification/ demagnification step value input terminal 12V to the vertical magnification/ demagnification step value, is directly inputted to the input side of the first selector 30V; a subtrahend, from the vertical magnification/demagnification step value input terminal 12V, is inputted through the multiplication circuit 32V where the vertical magnification/demagnification step value is multiplied by -1; an addend, from the first D flip-flop circuit for vertical direction to the vertical magnification/demagnification value, is directly inputted to the input side of the second selector 40 for vertical direction; a subtrahend is inputted through the multiplication circuit 38V where the vertical magnification/demagnification value is multiplied by -1.

8. The circuit for magnification/demagnification image defined in claim 5, wherein a horizontal magnification upper limit/lower limit setter 48H, designed for limiting the magnification by a set upper limit value for the horizontal magnification and limiting the magnification by a set lower limit value for the horizontal magnification, is inserted between the second D flip-flip circuit 44H for horizontal direction and the horizontal magnification/demagnification data processor 46H, and a vertical magnification upper limit/lower limit setter 48V, designed for limiting the magnification by a set upper limit value for the vertical magnification and limiting the magnification by a set lower limit value for the vertical magnification, is inserted between the second D flip-flop circuit 44V for vertical direction and the vertical magnification/demagnification data processor 46V.

9. A circuit for magnification/demagnification image, designed for processing the digital video signal inputted to the data input terminal 10 by the magnification/demagnification data processor 46 for output and comprising a demagnification circuit 50, an magnification circuit 51 and a third selector 28 for selecting the magnification for demagnification from the demagnification circuit 50 or the magnification for magnification from the magnification circuit 51 for output to the magnification/demagnification data processor 46, wherein the demagnification circuit 50 comprises a first selector 30R, for selecting the addend or the subtrahend from the predetermined magnification/demagnification step value inputted from a demagnification step value input terminal 52, a first D flip-flop circuit 36R for adding or subtracting, for output, the output of the first selector 30R to or from the predetermined initial value for magnification or demagnification, a second selector 40R, for selecting the addend for magnification or the subtrahend for demagnification according to the output of the first D flip-flop circuit 36R, and a second D flip-flop circuit 44R for adding or subtracting the output selected by the second selector 40R to and from the predetermined initial magnification signal, while the magnification circuit 51 comprises a first selector 30E, for selecting the addend or the subtrahend from the predetermined magnification/demagnification step value, which has been inputted from the magnification step value input terminal 53, a first D flip-flop circuit 36E, for adding or subtracting the output of the first selector 30E to or from the predetermined initial value for magnification or demagnification, a second selector 40E, for selecting the addend for magnification or the subtrahend for demagnification according to the output of the first D flip-flop circuit 36E, and a second D flip-flop circuit 44E for adding or subtracting the output selected by the second selector 40E to and from the predetermined magnification signal.

10. The circuit for magnification/demagnification image defined in claim 9, wherein the first D flip-flop circuit 36R and the second D flip-flop circuit 44R of the demagnification circuit 50 and the first D flip-flop circuit 36E and the second D flip-flop circuit 44E of the magnification circuit 51 respectively perform the addition and subtraction for each clock signal synchronized with the dot signal.

11. The circuit for magnification/demagnification image defined in claim 9, wherein, in the demagnification circuit 50, an addend to the magnification/ demagnification step value from the demagnification step value input terminal 52 is directly inputted to the input side of the first selector 30R; a subtrahend is inputted through a multiplication circuit 32R where the magnification/ demagnification step value from the demagnification step value input terminal 52 is multiplied by -1; an addend to the magnification/demagnification value from the first D flip-flop circuit is directly inputted to the input side of the second selector 40R; a subtrahend is inputted through the multiplication circuit 38R where the magnification/ demagnification value from the first D flip-flop circuit 36R is multiplied by -1, while, in the magnification circuit 51, an addend to the magnification/demagnification step value from the magnification step value input terminal 53 is directly inputted to the input side of the first selector 30E; a subtrahend is inputted through the multiplication circuit 32E where the magnification/demagnification step value from the magnification step value input terminal 53 is multiplied by -1; an addend to the magnification/ demagnification value from the first D flip-flip circuit is directly inputted to the input side of the second selector 40E; a subtrahend is inputted through the multiplication circuit 38E where the magnification/demagnification value from the first D flip-flop circuit is multiplied by -1.

12. The circuit for magnification/demagnification image defined in claim 9, wherein, in the demagnification circuit 50, a magnification lower limit setter 48R, for limiting the magnification according to the set lower limit value of the magnification, is inserted between the second D flip-flop circuit 44R and the third selector 28, while, in the magnification circuit 51, a magnification upper limit setter 48E, for limiting the magnification according to the set upper limit value of the magnification, is inserted between the second D flip-flop circuit 44E and the third selector 28.

13. The circuit for magnification/demagnification image defined in claim 9, wherein a magnification upper limit/lower limit setter 48, for limiting the magnification by the set upper limit value of magnification and limiting the magnification by the set lower limit value of magnification, between the third selector 28 and the magnification/demagnification data processor 46.

14. A circuit for magnification/demagnification image, wherein a horizontal magnification/demagnification data processor 61 and a vertical magnification/ demagnification data processor 62 are inserted between the data input terminal 10 and the data output terminal 22; each of the horizontal magnification/demagnification data processor 61 and the vertical magnification/ demagnification data processor 62 comprises a demagnification circuit 50 and an magnification circuit 51; the demagnification circuit 50 comprises a first selector 30R, for selecting an addend or a subtrahend based on the predetermined magnification/demagnification step value inputted from the demagnification step value input terminal 52, a first D flip-flop circuit 36R for adding or subtracting the output of the first selector 30R to or from the predetermined initial value for magnification or demagnification, a second selector 40R for selecting an addend for magnification or a subtrahend for demagnification based on the output of the first D flip-flop circuit, a second D flip-flop circuit 44R for adding or subtracting the output selected by the second selector 40R to or from the predetermined initial magnification signal, while the magnification circuit 51 comprises a first selector 30E for selecting an addend or a subtrahend based on the predetermined magnification/demagnification step value inputted from the magnification step value input terminal 53, a first D flip-flop circuit 36E for adding or subtracting the output of the first selector 30E to or from predetermined initial value for magnification or demagnification, a second selector 40E for selecting an addend for magnification or a subtrahend for demagnification based on the output of the first D flip-flop circuit 36E and a second D flip-flop circuit 44E for adding or subtracting the output selected by the second selector 40E to or from the predetermined initial magnification signal.

15. The circuit for magnification/demagnification image defined in claim 14, wherein, in the horizontal magnification/demagnification data processor 61, the first D flip-flop circuit 36R, the second D flip-flop circuit 44R, the first D flip-flop circuit 36E and the second D flip-flop circuit 44E are designed to perform the addition and subtraction according to each clock signal synchronized with the horizontal dot signal, while, in the vertical magnification/demagnification data processor 62, the first D flip-flop circuit 36R, the second D flip-flop circuit 44R, the first D flip-flop circuit 36R and the second D flip-flop circuit 44E are designed to perform addition and subtraction according to each clock signal synchronized with the vertical line signal.

16. The circuit for magnification/demagnification image defined in claim 14, wherein an addend based on the magnification/demagnification step value from the demagnification step value input terminal 52 is directly inputted to the input side of the first selector 30R; a subtrahend is inputted through the multiplication circuit 32R where the magnification/demagnification step value from the demagnification step valued input terminal 52 is multiplied by -1; an addend for magnification or demagnification from the first D flip-flop circuit 36R is inputted to the input side of the second selector 40R; a subtrahend is inputted through the multiplication circuit 38R where the magnification/demagnification value from the first D flip-flop circuit 36R is multiplied by -1; an addend based on the magnification/demagnification step value from the magnification step value input terminal 53 is directly inputted to the input side of the first selector 30E; a subtrahend is inputted through the multiplication circuit 32E where the magnification/demagnification step value from the magnification step value input terminal 53 is multiplied by -1; an addend for magnification or demagnification from the first D flip-flop circuit is directly inputted to the input side of the second selector 40E; a subtrahend is inputted through the multiplication circuit 38E where the magnification/demagnification value from the first D flip-flop circuit 36E is multiplied by -1.

17. The circuit for magnification/demagnification image defined in claim 14, wherein a magnification upper limit/lower limit setter 48, for limiting the magnification by a set upper limit value while limiting the magnification by a set lower limit value, is inserted between the third selector 28 and the magnification/ demagnification data processor 46.

18. The circuit for magnification/demagnification image defined in claim 14, wherein a magnification lower limit setter 48R for limiting the magnification by a set lower limit value is inserted between the second D flip-flop circuit 44R and the third selector, while a magnification upper limit setter 48E for limiting the magnification by a set upper limit value is inserted between the second D flip-flop circuit 44E and the third selector 28.

19. The circuit for magnification/demagnification image defined in claim 14, wherein a magnification upper limit/lower limit setter 48, comprising an upper limit comparator 48a for limiting the upper limit value of set magnification and a lower limit comparator 48b for limiting the lower limit value of set magnification, is inserted between the third selector 28 and the magnification/ demagnification data processor 46.

20. A circuit for magnification/demagnification image, designed for processing, for output, the digital video signal inputted to the data input terminal 10 by the digital video signal processor 46 for magnification or demagnification of the picture, comprising the first selector 30 for selecting an addend or a subtrahend based on the step value, which has been inputted from the magnification/ demagnification step value input terminal 12, the first D flip-flop circuit 36 for adding or subtracting the output of the first selector 30 to or from predetermined initial value for magnification or demagnification for output, the second selector for selecting an addend for magnification or a subtrahend for demagnification based on the output of the first D flip-flip circuit 36, the second D flip-flop circuit for adding or subtracting the output selected by the second selector to or from the predetermined initial magnification signal for output to the magnification/demagnification data processor 46, and the positive/negative discrimination signal generator 25 having the first inflection point setting signal input terminal 26 and connected to the preceding stage of the first selector 30.

21. The circuit for magnification/demagnification image defined in claim 20, wherein the first inflection point setting point input terminal 26 comprises 1 or a plurality of terminals whereto the signals for setting different inflection points are to be inputted.

22. A circuit for magnification/demagnification image, wherein the horizontal magnification/demagnification data processor 61 and the vertical magnification/ demagnification data processor 62 are connected in series, and these horizontal magnification/demagnification data processor 61 and the vertical magnification/ demagnification data processor 62 are respectively designed to be capable of processing the digital video signal inputted to the data input terminal 10 for magnification or demagnification and for output, comprising the first selector 30 for selecting an addend or a subtrahend based on the predetermined step value for magnification or demagnification, which has been inputted from the magnification/demagnification step value input terminal 12, the first D flip-flop circuit 36 for adding or subtracting the output of the first selector 30 to or from the predetermined initial value for magnification or demagnification for output, and the second selector 40 for selecting an addend for magnification or a subtrahend for demagnification based on the output of the first D flip-flop circuit 36, the second D flip-flop circuit 44 for adding or subtracting the output selected by the second selector 40 to or from the predetermined initial magnification signal for output to the magnification/demagnification data processor 46, and the positive/negative signal discrimination signal generator 25 having the first inflection point signal input terminal and connected to the preceding stage of the first selector.

23. The circuit for magnification/demagnification image defined in claim 20, wherein the magnification upper limit/lower limit setter 48, for limiting the magnification by the set upper limit value of magnification and limiting the magnification by the set lower limit value of magnification, is inserted between the second D flip-flop circuit 44 and the magnification/ demagnification data processor 46.

# Fig. 1

EP 1 168 832 A1

# Fig. 2

10 ── Data Input

24 { 24a ── Upper Limit Value(2.5)
24 { 24b ── Lower Limit Value(1.0)

48 ── Magnification Upper Limit/ Lower Limit setter

12 ── Step Value for Magnification/ Demagnification

30 ── 1st Selector

32 ── Multiplication Circuit

34 ──

36 ── 1st D Flip-flop Circuit

38 ── Multiplication Circuit

40 ── 2nd selector

42 ──

44 ── 2nd D Flip-flop Circuit

48a ── Upper Limit Value Comparator

48b ── Lower Limit Value Comparator

46 ── Magnification/ Demagnification Processer

22 ── Data Output

14 ── Initial Value

16 ── Center Detection Signal

18 ── Initial Magnification Signal

20 ── Clock Signal

EP 1 168 832 A1

16

# Fig. 3

| Dot | 1st selector30 | 1st DFF36 | 2nd Selector40 | 2nd DFF44 |
|---|---|---|---|---|
| 1 | — | — | — | 3.54609375 |
| 2 | — | 0.14453125 | -0.14453125 | 3.40156250 |
| 3 | -0.00390625 | 0.14062500 | -0.14062500 | 3.26093750 |
| ⋮ | ⋮ | ⋮ | ⋮ | ⋮ |
| 37 | -0.00390625 | 0.00781250 | -0.00781250 | 0.80390625 |
| 38 | -0.00390625 | 0.00390625 | -0.00390625 | 0.80000000 |
| 39 | -0.00390625 | 0 | 0 | 0.80000000 |
| 40 | +0.00390625 | 0 | 0 | 0.80000000 |
| 41 | +0.00390625 | 0.00390625 | 0.00390625 | 0.80000000 |
| 42 | +0.00390625 | 0.00781250 | 0.00781250 | 0.80390625 |
| ⋮ | ⋮ | ⋮ | ⋮ | ⋮ |
| 76 | +0.00390625 | 0.14062500 | 0.14062500 | 3.26093750 |
| 77 | — | 0.14453125 | 0.14453125 | 3.40156250 |
| 78 | — | — | — | 3.54609375 |

Step Value of Magnification/ Demagnification

Magnification/ Demagnification Value

+ is addtion Value - is substruction Value

Magnification (Magnifying Power Demagnifying Power)

# Fig. 4

# Fig. 5

Data Input

Upper Limit Value/
Lower Limit Value

Step Value for
Magnification/
Demagnification

Initial Value

Center Detection Signal

Initial Magnification Signal

Clock Signal (Synchronized with Dot)

Multiplication Circuit

1st Selector

1st D Flip-flop Circuit

Multiplication Circuit

2nd selector

2nd D Flip-flop Circuit

Magnification Upper Limit/ Lower Limit setter

Horizontal Magnification/ Demagnification Processor

Data Output

EP 1 168 832 A1

# Fig. 6

10

24V Data Input

12V Upper Limit Value/ Lower Limit Value

34V 36V 40V 42V 44V 46V

Step Value for Magnification/ Demagnification

Multiplication Circuit

1st Selector

30V 32V

1st D Flip-flop Circuit

Multiplication Circuit

2nd selector

2nd D Flip-flop Circuit

38V

48V Magnification Upper Limit/ Lower Limit setter

Vertical Magnification/ Demagnification Processor

22V Data Output

14V
16V Initial Value

18V Center Detection Signal

Initial Magnification Signal

Clock Signal (Synchronized in Line)

20V

# Fig. 7

# Fig. 8

## (a)Horizontal Derection

| Dot | 1st selector30H | 1st DFF36H | 2nd Selector40H | 2nd DFF44H |
|---|---|---|---|---|
| 1 | 0 | 0 | 0 | 3.546094 |
| 2 | 0 | 0.144531 | −0.144531 | 3.401563 |
| 3 | −0.003906 | 0.140625 | −0.140625 | 3.260938 |
| 4 | −0.003906 | 0.136719 | −0.136719 | 3.124219 |
| ⋮ | ⋮ | ⋮ | ⋮ | ⋮ |

## (b)Vertical Derection

| Line | 1st selector30V | 1st DFF36V | 2nd Selector40V | 2nd DFF44V |
|---|---|---|---|---|
| 1 | 0 | 0 | 0 | 0.800000 |
| 2 | 0 | 0.003906 | 0.003906 | 0.803906 |
| 3 | 0.003906 | 0.007813 | 0.007813 | 0.811719 |
| 4 | 0.003906 | 0.011719 | 0.011719 | 0.823438 |
| ⋮ | ⋮ | ⋮ | ⋮ | ⋮ |

Fig. 9

# Fig. 10

| Dot | 1st DFF36 | 2nd DFF44 | Coefficient After Correction | Magnification | Lower Limit after Processing | 1st DFF3E | Coefficient | Magnification | Upper Limit/ Lower Limit after Processing |
|---|---|---|---|---|---|---|---|---|---|
| 1 | 0.00 | 179.00 | 179 | 0.6992 | 0.8000 | — | — | — | 0.8000 |
| 2 | 0.25 | 179.25 | 179 | 0.6992 | 0.8000 | — | — | — | 0.8000 |
| 3 | 0.50 | 179.75 | 179 | 0.6992 | 0.8000 | — | — | — | 0.8000 |
| ⋮ | ⋮ | ⋮ | ⋮ | ⋮ | ⋮ | ⋮ | ⋮ | ⋮ | ⋮ |
| 13 | 3.00 | 198.50 | 198 | 0.7734 | 0.8000 | — | — | — | 0.8000 |
| 14 | 3.25 | 201.75 | 201 | 0.7852 | 0.8000 | — | — | — | 0.8000 |
| 15 | 3.50 | 205.25 | 205 | 0.8008 | 0.8008 | — | — | — | 0.8008 |
| ⋮ | ⋮ | ⋮ | ⋮ | ⋮ | ⋮ | ⋮ | ⋮ | ⋮ | ⋮ |
| 25 | 6.00 | 254.00 | 254 | 0.9922 | 0.9922 | — | — | — | 0.9922 |
| 26 | 6.25 | 260.25 | 260 | 1.0156 | 1.0156 | 3 | 253 | 1.0119 | 1.0119 |
| 27 | 6.50 | 266.75 | 266 | 1.0391 | 1.0391 | 9 | 247 | 1.0364 | 1.0364 |
| ⋮ | ⋮ | ⋮ | ⋮ | ⋮ | ⋮ | ⋮ | ⋮ | ⋮ | ⋮ |
| 32 | 7.75 | 303.00 | 303 | 1.1836 | 1.1836 | 39 | 217 | 1.1797 | 1.1797 |

# Fig. 11

# Fig. 12

Fig.13

# Fig. 14

| Area 1 | Area 2 | Area 3 | Area 4 |
|:---:|:---:|:---:|:---:|
| + | — | + | — |

1st
Inflection Point

2nd
Inflection Point

# Fig. 15

# Fig. 16

| Dot | Step Value for Magnification/Demagnification | 1st selector30 | Variable Coefficient of Magnification/Demagnification 1st DFF36 | 2nd Selector40 | Upper Limit/Lower Limit Non Processing 2nd DFF44 | Upper Limit/Lower Limit after Processing Upper Limit/Lower Limit setter48 |
|---|---|---|---|---|---|---|
| 1 | 0.00390625 | 0.00390625 | 0.00390625 | -0.00390625 | 2.62265625 | 2.5000000 |
| 2 | | " | 0.00781250 | -0.00781250 | 2.61875000 | " |
| ⋮ | ⋮ | ⋮ | ⋮ | ⋮ | ⋮ | ⋮ |
| 8 | | " | 0.03125000 | -0.03125000 | 2.51328125 | 2.5000000 |
| 9 | | " | 0.03515625 | -0.03515625 | 2.48203125 | 2.48203125 |
| ⋮ | ⋮ | ⋮ | ⋮ | ⋮ | ⋮ | ⋮ |
| 20 | | " | 0.07812500 | -0.07812500 | 1.88046875 | 1.88046875 |
| 21 | 1st Inflection Point | " | 0.08203125 | -0.08203125 | 1.80234375 | 1.80234375 |
| 22 | | -0.00390625 | 0.07812500 | -0.07812500 | 1.72031250 | 1.72031250 |
| ⋮ | ⋮ | ⋮ | ⋮ | ⋮ | ⋮ | ⋮ |
| 35 | | " | 0.02734375 | -0.02734375 | 1.00937500 | 1.00937500 |
| 36 | | " | 0.02343750 | -0.02343750 | 0.98203125 | 1.00000000 |
| ⋮ | ⋮ | ⋮ | ⋮ | ⋮ | ⋮ | ⋮ |
| 41 | | " | 0.00390625 | -0.00390625 | 0.90390625 | " |
| 42 | | 0 | 0 | 0 | 0.90000000 | " |
| 43 | | 0.00390625 | 0.00390625 | 0.00390625 | 0.90000000 | " |
| ⋮ | ⋮ | ⋮ | ⋮ | ⋮ | ⋮ | ⋮ |
| 49 | | " | 0.02734375 | 0.02734375 | 0.98203125 | 1.00000000 |
| 50 | | " | 0.03125000 | 0.03125000 | 1.00937500 | 1.00937500 |
| ⋮ | ⋮ | ⋮ | ⋮ | ⋮ | ⋮ | ⋮ |
| 62 | | " | 0.07812500 | 0.07812500 | 1.64218750 | 1.64218750 |
| 63 | 2nd Inflection Point | " | 0.08203125 | 0.08203125 | 1.72031250 | 1.72031250 |
| 64 | | -0.00390625 | 0.07812500 | 0.07812500 | 1.80234375 | 1.80234375 |
| ⋮ | ⋮ | ⋮ | ⋮ | ⋮ | ⋮ | ⋮ |
| 76 | | " | 0.03125000 | 0.03125000 | 2.48203125 | 2.48203125 |
| 77 | | " | 0.02734375 | 0.02734375 | 2.51328125 | 2.5000000 |
| ⋮ | ⋮ | ⋮ | ⋮ | ⋮ | ⋮ | ⋮ |
| 83 | | " | 0.00390625 | 0.00390625 | 2.61875000 | 2.5000000 |
| 84 | | " | 0 | | 2.62265625 | " |

# Fig. 17

# Fig. 18

| Dot | Step Value for Magnification/ Demagnification | Variable Coefficient of Magnification/ Demagnification | | | Upper Limit/ Lower Limit Non Processing | Upper Limit/ Lower Limit after Processing |
|---|---|---|---|---|---|---|
| | | 1st selector30 | 1st DFF36 | 2nd Selector40 | 2nd DFF44 | Upper Limit/ Lower Limit setter48 |
| 1 | 0.00390625 | 0.00390625 | 0.00390625 | -0.00390625 | 0.90000000 | 1.00000000 |
| 2 | | " | 0.00781250 | -0.00781250 | 0.90390625 | " |
| ⋮ | ⋮ | ⋮ | ⋮ | ⋮ | ⋮ | ⋮ |
| 8 | | " | 0.03125000 | -0.03125000 | 0.98203125 | " |
| 9 | | " | 0.03515625 | -0.03515625 | 1.00937500 | 1.00937500 |
| ⋮ | ⋮ | ⋮ | ⋮ | ⋮ | ⋮ | ⋮ |
| 20 | | " | 0.07812500 | -0.07812500 | 1.64218750 | 1.64218750 |
| 21 (1st Inflection Point) | | " | 0.08203125 | -0.08203125 | 1.72031250 | 1.72031250 |
| 22 | | -0.00390625 | 0.07812500 | -0.07812500 | 1.80234375 | 1.80234375 |
| ⋮ | ⋮ | ⋮ | ⋮ | ⋮ | ⋮ | ⋮ |
| 35 | | " | 0.02734375 | -0.02734375 | 2.48203125 | 2.48203125 |
| 36 | | " | 0.02343750 | -0.02343750 | 2.51328125 | 2.5000000 |
| ⋮ | ⋮ | ⋮ | ⋮ | ⋮ | ⋮ | ⋮ |
| 41 | | " | 0.00390625 | -0.00390625 | 2.61875000 | " |
| 42 | | 0 | 0 | 0 | 2.62265625 | " |
| 43 | | 0.00390625 | 0.00390625 | 0.00390625 | 2.62265625 | " |
| ⋮ | ⋮ | ⋮ | ⋮ | ⋮ | ⋮ | ⋮ |
| 49 | | " | 0.02734375 | 0.02734375 | 2.51328125 | " |
| 50 | | " | 0.03125000 | 0.03125000 | 2.48203125 | 2.48203125 |
| ⋮ | ⋮ | ⋮ | ⋮ | ⋮ | ⋮ | ⋮ |
| 62 | | " | 0.07812500 | 0.07812500 | 1.88046875 | 1.88046875 |
| 63 (2nd Inflection Point) | | " | 0.08203125 | 0.08203125 | 1.80234375 | 1.80234375 |
| 64 | | -0.00390625 | 0.07812500 | 0.07812500 | 1.72031250 | 1.72031250 |
| ⋮ | ⋮ | ⋮ | ⋮ | ⋮ | ⋮ | ⋮ |
| 76 | | " | 0.03125000 | 0.03125000 | 1.00937500 | 1.00937500 |
| 77 | | " | 0.02734375 | 0.02734375 | 0.98203125 | 1.00000000 |
| ⋮ | ⋮ | ⋮ | ⋮ | ⋮ | ⋮ | ⋮ |
| 83 | | " | 0.00390625 | 0.00390625 | 0.90390625 | " |
| 84 | | " | 0 | | 0.90000000 | " |

## INTERNATIONAL SEARCH REPORT

| | International application No. |
|---|---|
| | PCT/JP99/06874 |

**A. CLASSIFICATION OF SUBJECT MATTER**
Int.Cl$^7$  H04N5/262, 5/46, G09G5/36, 3/20

According to International Patent Classification (IPC) or to both national classification and IPC

**B. FIELDS SEARCHED**

Minimum documentation searched (classification system followed by classification symbols)
Int.Cl$^7$  H04N5/262, 5/46, 5/66, G09G5/36, 3/20

Documentation searched other than minimum documentation to the extent that such documents are included in the fields searched
Jitsuyo Shinan Koho        1922-1996    Toroku Jitsuyo Shinan Koho  1994-2000
Kokai Jitsuyo Shinan Koho  1971-2000    Jitsuyo Shinan Toroku Koho  1996-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 11-73154, A (Mitsubishi Electric Corporation), 16 March, 1999 (16.03.99), Full text; Figs. 1 to 11   (Family: none) | 1-23 |
| A | JP, 10-105153, A (Fujitsu Limited), 24 April, 1998 (24.04.98), Full text; Figs. 1 to 7   (Family: none) | 1-23 |
| A | JP, 10-13762, A (Fujitsu General Limited), 16 January, 1998 (16.01.98), Full text; Figs. 1 to 5   (Family: none) | 1-23 |
| A | JP, 11-15461, A (Matsushita Electric Ind. Co., Ltd.), 22 January, 1999 (22.01.99), Full text; Figs. 1 to 8   (Family: none) | 1-4,9-13,20, 21 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 March, 2000 (07.03.00) | 21 March, 2000 (21.03.00) |

| Name and mailing address of the ISA/ | Authorized officer |
|---|---|
| Japanese Patent Office | |
| Facsimile No. | Telephone No. |

Form PCT/ISA/210 (second sheet) (July 1992)